(19) Europäisches Patentamt
European Patent Office
Office européen des brevets

(11) EP 4 137 521 A1

(12) EUROPEAN PATENT APPLICATION

(43) Date of publication:
22.02.2023 Bulletin 2023/08

(21) Application number: 21191502.0

(22) Date of filing: 16.08.2021

(51) International Patent Classification (IPC):
*C08F 2/06* (2006.01) *C08F 6/00* (2006.01)
*C08F 110/02* (2006.01) *C08J 11/02* (2006.01)

(52) Cooperative Patent Classification (CPC):
(C-Sets available)
C08F 210/16; C08F 2/06; C08F 6/003; C08F 6/02

(Cont.)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Borealis AG
1020 Vienna (AT)

(72) Inventors:
- AL-HAJ ALI, Mohammad
Kulloo (FI)
- SLEIJSTER, Henry
Sittard-Geleen (NL)

(74) Representative: Kador & Partner PartG mbB
Corneliusstraße 15
80469 München (DE)

# (54) PROCESS FOR PRODUCING A POLYOLEFIN WITH LOW VOLATILE CONTENT

(57) A process for the separation of at least one polyolefin from a product stream from a solution polymerization process, wherein the product stream comprises the at least one polyolefin and a mixture of volatiles, the process comprising the steps of separating the product stream into a first polyolefin-lean vapor stream and a first condensed polyolefin-rich stream; separating the first condensed polyolefin-rich stream into a second polyolefin-lean vapor stream and a second condensed polyolefin-rich stream; separating the second condensed first condensed polyolefin-rich stream into a last polyolefin-lean vapor stream and a last condensed polyolefin-rich stream; characterized in that the first polyolefin-lean vapor stream and the second polyolefin-lean vapor stream are introduced into an initial feed stream of the solution polymerization process without any further purification step.

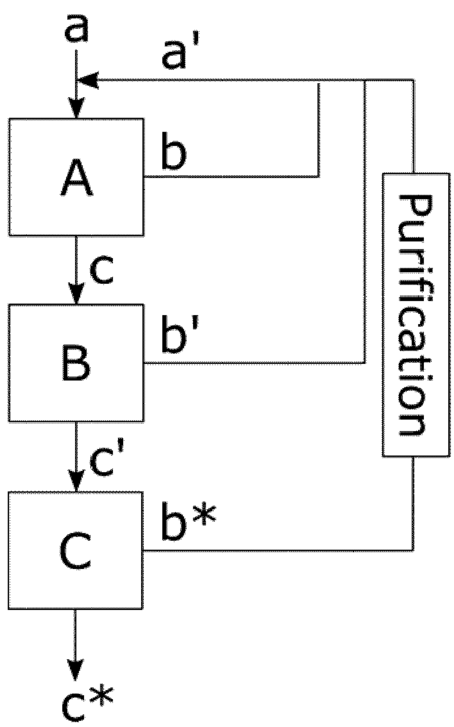


Figure 1

EP 4 137 521 A1

(52) Cooperative Patent Classification (CPC): (Cont.)

C-Sets
**C08F 6/003, C08L 23/0815;**
**C08F 6/02, C08L 23/0815**

## Description

The present invention is concerned with a process for separating a polyolefin from a product stream of a solution polymerization process. In particular, the present invention relates to a simplification of the process in that at least some of the remaining overhead streams of separation steps can be directly returned to a feed stream of the solution polymerization process, i.e. without any further purification. Furthermore, the present invention is concerned with a polyolefin obtainable from such a process.

## Background

In polyolefin polymerization technology, in particular in polyolefin polymerization technology based on solution techniques, the downstream processing of the product stream is essential for producing a product with low volatiles content in view of solvent and/or unreacted (co)monomers.

The downstream processing takes place via several separation steps, typically pressure flashing steps. Typically, these separation steps are repeated at least once to produce polyolefins with low volatile content. Each of these steps produces a polymer-rich phase and a polymer-lean phase, whereas the latter is typically reintroduced into the polymerization process after being subject to at least one purification step.

WO 2020/060745 A1 is directed towards the devolatilization of polymers. It discloses that the feed stream of the reactor is temperature adjusted, pressure adjusted and separated into a polymer-lean and a polymer-rich phase. The separator is generally described as a high pressure liquid-liquid separator (HPS). The polymer-rich phase is then again temperature adjusted and fed into the second separator, which is a flash separator. WO 2020/060745 uses high pressure injection of volatiles into the second separator to lower the partial pressure of the volatiles composition in the polymer leading to facilitated flash separation. The polymer-rich phase of the second separator is then added to a devolatilization extruder as a final step. However, WO 2020/060745 does not provide any special teaching in view of facilitated returning of polymer-lean phases from such separation step into the feed stream of the polymerization process.

WO 2009/126277 A2 discloses a polymer production process with a subsequent LCST separator, in which the lower critical solution temperature boundary is crossed in the inlet stream forming two fluid phases. Subsequent processing comprises one or more flash vessels in series and a devolatilization extruder. However, again, WO 2009/126277 A2 does not provide any special teaching in view of facilitated returning of polymer-lean phases from such separation steps into the feed stream of the polymerization process.

## Problem of the invention

One of the major concerns in modern solution polymerization processes are energy efficiency and cost considerations. In the polymerization processes of the prior art, the overhead phase of each separation step ideally is returned to an initial feed stream of the solution polymerization process. However, in typical appliances of the process of the prior art the feed stream is purified before returning, further increasing energy consumption, complexity of the setup, and costs, while decreasing the efficiency of the overall process. Reason is that impurities introduced into the recycle streams may lead to reduction of catalyst activity in the reactor. Also spontaneous polymerization of the mixture in such streams induced by such impurities after adjustment of the temperatures and the pressures to the requirements of the polymerization reaction may lead to fouling of the equipment. Finally, entrainment of polymer particles originated from the separation steps can result in fouling of downstream equipment, e.g. heat exchangers, in the recycle stream.

## Object of the present invention

Therefore, there is the need for a process of separating a polyolefin from a product stream of a solution polymerization process yielding a low volatiles containing polyolefin, wherein the process is more energy efficient, less complex, less prone to fouling, and less costly than those known in the prior art.

## Summary of the invention

It has now surprisingly found that above-mentioned object can be achieved by a process for the separation of at least one polyolefin from a product stream from a solution polymerization process, wherein the product stream comprises the at least one polyolefin and a mixture of volatiles, the process comprising the steps of separating the product stream into a first polyolefin-lean vapor stream and a first condensed polyolefin-rich stream; separating the first condensed polyolefin-rich stream into a second polyolefin-lean vapor stream and a second condensed polyolefin-rich stream; separating the second condensed first condensed polyolefin-rich stream into a last polyolefin-lean vapor stream and a last condensed polyolefin-rich stream; characterized in that the first polyolefin-lean vapor stream and the second polyolefin-lean vapor stream are introduced into an initial feed stream of the solution polymerization process without any further purification step.

It has been further surprisingly found that above-mentioned object can be achieved by a polyolefin obtainable by a process for the separation of at least one polyolefin from a product stream from a solution polymerization process, wherein the product stream comprises the at least one polyolefin and a mixture of volatiles, the process comprising the steps of separating the product stream into a first polyolefin-lean vapor stream and a first condensed polyolefin-rich stream; separating the first condensed polyolefin-rich stream into a second polyolefin-lean vapor stream and a second condensed polyolefin-rich stream; separating the second condensed first condensed polyolefin-rich stream into a last polyolefin-lean vapor stream and a last condensed polyolefin-rich stream; characterized in that the first polyolefin-lean vapor stream and the second polyolefin-lean vapor stream are introduced into an initial feed stream of the solution polymerization process without any further purification step.

## Definitions

The expression *'volatiles'* or *'volatile compounds'* as used herein has to be understood as compounds having significantly lower molecular weight in comparison to the polyolefin separated in the process of the invention. Such compounds typically are present in the gaseous form when being exposed to a flash separator. Commonly, the volatile compounds are a mixture of volatile hydrocarbons. Preferably, the mixture of volatile hydrocarbons comprises at least one solvent, optionally monomer, and comonomer.

*'Flash separators'* have been known in the prior art for decades (also as low-pressure separators). As it is well known in the art, a liquid feed is passed to a flash vessel operated at a reduced pressure. Thereby a part of the liquid phase vaporizes and can be withdrawn as an overhead stream (or a vapor stream) from the low pressure separator. The part remaining in liquid phase is then withdrawn as a bottom stream or a liquid stream from the flash vessel. Operating the low pressure separator under conditions such that both vapor and liquid phases are present in the flash vessel describes this situation.

The term *'condensation point'* as used herein has to be understood as a combination of conditions, which lead to condensation of compounds from a vaporized mixture. In particular, the condensation point depends on the pressure, the temperature and the combination of hydrocarbons, such as solvent, monomer and optionally comonomer, and any other gaseous components of the system.

The term *'separation efficiency* as used herein is defined as the mass flow of the component withdrawn in the polymer-lean stream or vapor stream divided by the (theoretical) mass flow rate of the component in the polymer-rich stream or condensed stream in equilibrium conditions.

The term *'vacuum pressure conditions'* as used herein denotes vacuum pressures between of lower than 1500 mbara, preferably lower than 800 mbara, and most preferably lower than 200 mbara. Preferably. The pressures are not lower than 1 mbara, more preferably not lower than 5 mbara, and most preferably not lower than 20 mbara. Pressures lower than the ranges given above are disadvantageous in view of energy consumption and resulting costs. Pressures higher than the ranges given above result in too high amounts of volatiles in the final polymer.

The *'average residence time'* as provided therein has to be understood as the average residence time of the contents of the polymerization reactor including catalyst.

The terms *'polyolefin-rich stream'* and *'polyolefin-lean stream'* as defined herein denotes two streams from a separation device separating output streams of a polymerization reactor, wherein the polymer-rich stream has higher polymer content than the polymer-lean stream. Thereby, the minimum concentration of the polyolefin in the polymer-rich stream is more than 60 wt% with respect to the weight of the whole polymer-rich stream. Likewise, the maximum concentration of polyolefin in the polymer-lean stream lower than 10 wt% with respect to the weight of the whole polymer-lean stream.

## Description of the drawings

Figure 1 shows a schematic layout of the process of the present invention.

<u>Reference signs</u>

A first separation step (step A)

B second separation step (step B)

C third separation step (step C)

a product stream

a' initial feed stream

b first polymer-lean vapor stream of step A

c first condensed polymer-rich stream of step A

b' second polymer-lean vapor stream of step B

c' second condensed polymer-rich stream of step B

b* last polymer-lean vapor stream of step C

c* last condensed polymer-rich stream of step C

**Detailed description of the invention**

In the following, the invention is described in detail.

*General process of the invention*

Generally, the process of the present invention is connected to a solution polymerization process. The process of the present invention is used to remove volatile compounds from the product polymer and to recycle streams of components removed from the polymer. Therefore, the solution polymerization process should be described in the following.

*Solution polymerization process*

Preferably, the present invention is applicable for supercritical, solution and advanced solution polymerization processes. More preferably are continuous supercritical, solution and advanced solution polymerization processes. Most preferably, the production process comprises a continuous solution polymerization process.

The polymer produced in the solution polymerization process is a polyolefin. Preferably, the polyolefin is polyethylene (PE), in particular high density polyethylene (HDPE), low-density polyethylene (LDPE) or linear low-density polyethylene (LLDPE), or polypropylene (PP). Most preferably, the polyolefin is a polyethylene copolymer or polyethylene homopolymer.

In case the polymer is a copolymer, the comonomer is different from the $\alpha$-olefin monomer and is selected from the group consisting of linear and cyclic olefins and $\alpha$-olefins having from 2 to 12 carbon atoms and mixtures thereof. Preferably, the comonomer is an $\alpha$-olefin different from the $\alpha$-olefin monomer and is selected from the group consisting of linear $\alpha$-olefins having from 2 to 12 carbon atoms and mixtures thereof, preferably 4 to 10 carbon atoms, most preferably 1-butene and 1-octene.

In a most preferred embodiment, the polyolefin is produced in a solution polymerization process as disclosed in the following.

The polymerization is typically conducted in the presence of an olefin polymerization catalyst. Preferably, the olefin polymerization catalyst is a metallocene catalyst. Preferably, the polymerization catalyst comprises a metallocene complex and a boron containing cocatalyst and/or an aluminoxane co-catalyst. More preferably, the metallocene catalyst comprises a hafnocene catalyst. Even more preferably, the hafnocene catalyst comprises a hafnocene complex comprising a cyclopentadienyl (Cp) ligand, a fluorenyl (Flu) ligand and a covalent bridge connecting the two ligands.

Thus, more preferably, the polymerization catalyst comprises at least one metallocene complex selected from complexes M1, M2, and M3, or mixtures thereof, which are further described in the following.

Metallocene complex M1 is a metallocene complex of formula (I):

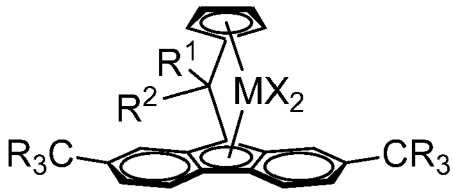

(I)

wherein

M is Hf or a mixture with Zr, provided that more than 50% by moles of the complex of Formula II has M = Hf,

X is a sigma ligand,

R are the same or different from each other and can be saturated linear or branched $C_1$-$C_{10}$ alkyl, $C_5$-$C_{10}$ aryl, $C_6$-$C_{20}$ alkylaryl or $C_6$-$C_{20}$ arylalkyl groups, which can optionally contain up to 2 heteroatoms or silicon atoms,

$R^1$ is a $C_6$-$C_{20}$-aryl, which can be unsubstituted or substituted by one or up to 5 linear or branched $C_1$- $C_{10}$ alkyl group(s),

$R^2$ is a saturated linear or cyclic $C_3$ - $C_{20}$ alkyl group or a branched $CR^3R^4R^5$ group, wherein $R^3$ is hydrogen or an $C_1$ - $C_{20}$ alkyl group and

$R^4$ and $R^5$ are the same or are different and can be an $C_1$ - $C_{20}$ alkyl group,

Metallocene complex M2 is a metallocene complex of formula (I),
wherein

M is Hf or a mixture with Zr, provided that more than 50% by moles of the complex of Formula II has M = Hf,

X is a sigma ligand,

R are the same or different from each other and can be saturated linear or branched $C_1$-$C_{10}$ alkyl, $C_5$-$C_{10}$ aryl, $C_6$-$C_{20}$ alkylaryl or $C_6$-$C_{20}$ arylalkyl groups, which can optionally contain up to 2 heteroatoms or silicon atoms,

$R^1$ is a $C_6$-$C_{10}$ aryl or $C_6$-$C_{20}$ alkylaryl group optionally containing up to 2 heteroatoms or silicon atoms or a $C_4$-$C_{10}$ heteroaryl group

$R^2$ is a $C_4$-$C_{20}$ cycloalkyl group, optionally carrying alkyl substituents in beta-positions, of formula (II)

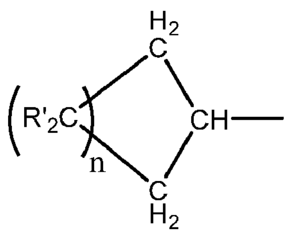

(II)

Metallocene complex M3 is a metallocene complex of formula (III):

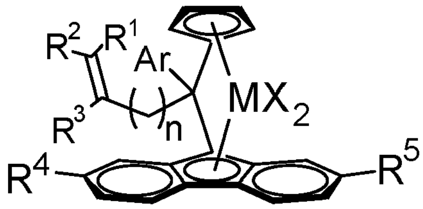

(III)

wherein

M is Hf,

X is a sigma-donor ligand,

$R^1$, $R^2$, $R^3$ are the same or different from each other and can be hydrogen or a saturated linear or branched $C_1$-$C_{10}$ alkyl, whereby the alkyl group can optionally contain up to 2 heteroatoms belonging to groups 14-16 of the periodic table, or $R^1$ and $R^2$ or $R^2$ and $R^3$ can form a ring having 4 to 6 C-atoms and 1 to 3 double bonds,

$R^4$ and $R^5$ are the same or different from each other and can be saturated linear or branched $C_1$-$C_{10}$ alkyl, $C_5$-$C_{10}$ aryl, $C_6$-$C_{20}$ alkylaryl or $C_6$-$C_{20}$ arylalkyl groups, which can optionally contain up to 2 heteroatoms belonging to groups 14-16 of the periodic table,

n can be 1 to 5,

Ar is a $C_6$-$C_{20}$-aryl or -heteroarylgroup, which can be unsubstituted or substituted by 1 to 5 linear or branched $C_1$-$C_{10}$ alkyl group(s),

Hence, preferably, the polymerization process is preferably conducted in the presence of an olefin polymerization catalyst selected from the list consisting of catalysts C1, C2, C3, and C4, which are described in the following.

Catalyst C1 comprises at least one metallocene complex M1 and a boron containing cocatalyst. As regards the preparation and further details of such catalyst, reference is made to WO 2018/108917 A1, which is herewith incorporated by reference.

Catalyst C2 comprises at least one metallocene complex M2 and a boron containing cocatalyst. As regards the preparation and further details of such catalyst, reference is made to WO 2018/108918 A1, which is herewith incorporated by reference.

Catalyst C3 comprises at least one metallocene complex M3 and an aluminoxane cocatalyst and optionally an aluminium alkyl compound $Al(R_7)_3$, with $R_7$ being a linear or branched $C_2$-$C_8$-alkyl group. As regards the preparation and further details of such catalyst, reference is made to WO 2018/178151 A1, which is herewith incorporated by reference.

Catalyst C4 comprises at least one metallocene complex M3 and a boron containing cocatalyst. As regards the preparation and further details of such catalyst, reference is made to WO 2018/178152 A1, which is herewith incorporated by reference.

In a solution polymerization process a solvent is also present. The solvent is in liquid or supercritical state in the polymerization conditions. The solvent is typically and preferably a hydrocarbon solvent. The liquid hydrocarbon solvent used is preferably a $C_{5-12}$-hydrocarbon, which may be unsubstituted or substituted by $C_{1-4}$ alkyl group such as pentane, methyl pentane, hexane, heptane, octane, cyclohexane, methylcyclohexane and hydrogenated naphtha. More preferably, unsubstituted $C_{6-10}$-hydrocarbon solvents are used, even more preferably unsubstituted $C_{5-7}$-hydrocarbon solvents. Most preferably, hexane is used.

Other components may also be added into the reactor. It is known to feed hydrogen into the reactor for controlling the molecular weight of the polymer formed during the polymerization.

Typically, the content of the polymer in the stream withdrawn from the solution polymerization process comprising the solvent, the polymer and the unreacted monomer and optionally comonomer is from 10 to 35 wt.-%, preferably from 12.5 to 30 wt.-%, more preferably from 15 to 25 wt.-%, and most preferably from 19 to 24 wt.-%.

Preferably, the stream withdrawn from the solution polymerization reactor is heated to a temperature which is

at least 5 °C higher than the temperature of the reaction mixture at the outlet of the reactor for a time period of between 1 and 250 seconds in order to de-activate the polymerization catalyst.

Heating the stream withdrawn from the solution polymerization reactor to the prescribed temperature for the prescribed time period sufficiently de-activates the polymerization catalyst so that uncontrolled polymerization reactions in the low pressure separator are avoided. Thus, no de-activation agent needs to be added to the reactor outlet stream avoiding the disadvantages of a carrying over of such agents to the reactor with re-cycled monomers and/or solvent as described above.

It is, accordingly, preferred in the present invention that no catalyst de-activation agent is added before feeding the stream withdrawn from the solution polymerization reactor to the separation process of the present invention.

In a preferred embodiment, the stream withdrawn from the solution polymerization reactor is heated to a temperature which is at least 10 °C higher than the temperature of the reaction mixture at the outlet of the reactor, more preferably is at least 15 °C higher than the temperature of the reaction mixture at the outlet of the reactor, still more preferably is at least 20 °C higher than the temperature of the reaction mixture at the outlet of the reactor, still more preferably is at least 30 °C higher than the temperature of the reaction mixture at the outlet of the reactor, still more preferably is heated to a temperature which is at least 40 °C higher than the temperature of the reaction mixture at the outlet of the reactor and most preferably is heated to a temperature which is at least 50 °C higher than the temperature of the reaction mixture at the outlet of the reactor.

Usually, the temperature to which the stream withdrawn from the solution polymerization reactor is heated is at most 100 °C higher than the temperature of the reaction mixture at the outlet of the reactor, more preferably is at most 90 °C higher than the temperature of the reaction mixture at the outlet of the reactor, and most preferably is at most 70 °C higher than the temperature of the reaction mixture at the outlet of the reactor.

Preferably, the stream withdrawn from the solution polymerization reactor is heated to a temperature as herein drescribed for a time period of between 10 and 200 seconds, more preferably for a time period of between 15 and 180 seconds, still more preferably for a time period of between 20 and 180 seconds, still more preferably of between 40 and 170 seconds, still more preferably of between 50 and 160 seconds, and most preferably of between 60 and 150 seconds.

The stream withdrawn from the solution polymerization reactor is preferably heated to a temperature of at least 180 °C, more preferably to a temperature of at least 190 °C, still more preferably to a temperature of at least 200 °C, and most preferably to a temperature of at least 210 °C.

The stream withdrawn from the solution polymerization reactor is preferably heated to a temperature of at most 275 °C, more preferably at most 260 °C and most preferably of at most 250 °C.

In principle, when heating is applied for a longer time, a lower temperature can be used, and when a shorter time is used, a higher temperature must be used in order to de-activate the catalyst.

Thus, in a preferred embodiment of the process of the invention, the reactor outlet stream is heated for a time period t (min) to a temperature which is at least x (°C) higher than the temperature of the reaction mixture at the outlet of the reactor complying with the relation:

$$t * x > 0.05,$$

in a further embodiment complying with the relation $t * x > 0.1$, in still a further embodiment complying with the relation $t * x > 0.2$, and in still a further embodiment complying with the relation $t * x > 0.5$.

After heat treatment of the stream withdrawn from the solution polymerization reactor, preferably no more than 10 wt.%, more preferably no more than 5 wt.%, still more preferably no more than 4 wt.% and most preferably no more than 2 wt.% of the catalyst is in an active state. Consequently, in such a setup, catalyst deactivators can be avoided leading to significantly reduced entrainment of such catalyst deactivators into the recycle streams.

In a preferred embodiment of the invention, the residence time of the catalyst in the reactor is further optimized, which means that, on the one hand, the residence time is adjusted so as to be long enough in order to ensure that in the reactor outlet stream leaving the reactor the catalyst is already sufficiently de-activated.

On the other hand, as a too long residence time might result in a large quantity of already de-activated catalyst in the reactor which has negative consequences on process economics, the present invention also allows for adjusting the residence time to be as short as possible to affect process economics as little as possible.

To optimize the catalyst residence time, the following mathematical equations may be utilized. After a time *t*, the concentration of active catalyst inside the reactor can be described by the following empirical equation (1):

$$C_{cat}^{*} = C_{cat,0}^{*} e^{-k_d t} \qquad (1)$$

wherein $C^*_{cat}$ is the concentration of active catalyst, $C^*_{cat,0}$ is the initial active catalyst concentration, $k_d$ is the kinetic

rate constant of the de-activation reaction and $t$ is time.

The catalyst de-activation constant $k_d$, can be modelled as temperature dependent through Arrhenius equation seen in equation (2):

$$k_d = k_{d,0} e^{\frac{E_{a,d}}{RT}} \qquad (2)$$

wherein $E_{a,d}$ is the activation energy constant, $R$ is the ideal gas constant and $T$ is the temperature.

To describe the residence time distribution (RTD) the particulars of the reactor setup have to be considered, as is well known to the skilled person.

As an example and in a preferred embodiment of the invention, a real reactor may be approximated by two continuously stirred tank reactors connected by a plug-flow reactor.

The RTD function, X(t), for such configuration is described by Equation 3:

$$X(t) = (1 - e^{\frac{-t}{t_1}})(1 - e^{\frac{-t-t_3}{t_2}}) \cdot 100 \qquad (3)$$

wherein $t$ is time in minutes, $t_1$ is the residence time in the first part of the reactor, $t_2$ is the residence time second part of the reactor and $t_3$ is the dead time between the sections.

Preferably, the average residence time in the reactor is chosen to be between 0.5 and 15 minutes, more preferably between 1 and 15 minutes.

A calculation according to the above equations leads to a preferred embodiment of the process of the invention wherein the average residence time $t_{average}$ in the reactor is complying with the relation:

$$2900/T_{reactor} -13 < t_{average} < 4200/T_{reactor} - 13,$$

preferably with the relation:

$$3000/T_{reactor} -13 < t_{average} < 3500/T_{reactor} - 13$$

wherein $T_{reactor}$ is the temperature in the polymerization reactor, and wherein the reactor is approximated by two continuously stirred tank reactors connected by a plug-flow reactor.

Preferably, in the process of the invention no more than 4 wt.% of catalyst in an active state, more preferably no more than 3 wt.% of catalyst in an active state, is leaving the reactor. Consequently, in such a setup, catalyst deactivators can be avoided leading to significantly reduced entrainment of such catalyst deactivators into the recycle streams. Also typically, the stream comprising the hydrocarbons, i.e. not the product stream, withdrawn from the reactor is further recycled, i.e. fed to the separation process downstream, to an amount of more than 20% of the total stream withdrawn from the reactor, preferably more than 40% and most preferably more than 60%.

Said stream is introduced to a separation process according to the present invention as described in the following.

*Separation process of the present invention*

In the most general embodiment of the invention, the separation process of the present invention is a process for the separation of at least one polyolefin from a product stream (a) from a solution polymerization process, wherein the product stream (a) comprises the at least one polyolefin and a mixture of volatiles, comprises the steps of:

A) separating the product stream (a) into a first polyolefin-lean vapor stream (b) and a first condensed polyolefin-rich stream (c);

B) separating the first condensed polyolefin-rich stream (c) into a second polyolefin-lean vapor stream (b') and a second condensed polyolefin-rich stream (c');

C) separating the second condensed polyolefin-rich stream (c') into a last polyolefin-lean vapor stream (b*) and a last condensed polyolefin-rich stream (c*);

and is characterized in that the first polyolefin-lean vapor stream (b) and the second polyolefin-lean vapor stream (b') are returned to an initial feed stream (a') of the polyolefin polymerization process without any further purification step.

Preferably, the mixture of volatiles comprises volatiles, such as solvent(s), monomer(s), and comonomer(s).

Generally, the solvent must be able to solve polyolefins, in particular the polyolefin to be separated in the process of the invention. Therefore, preferably, the solvent is a non-polar solvent. Therefore, the solvent preferably is a hydrocarbon. More preferably, the solvent is a paraffinic solvent due to the paraffinic nature of polyolefins (*'Similia similibus solventum'*). Aromatic hydrocarbon solvents are known for good solvent properties and can therefore also be considered. Therefore, preferably, the solvent is selected from the list of low boiling solvents and high boiling solvents. Low boiling solvents comprise n-alkanes and aromatic hydrocarbons, such as toluene and xylene. The advantage of low boiling solvents is that they can be separated from dissolved polyolefins with less energy consumption. High-boiling solvents comprise paraffinic gas oil or vacuum gas oil. Such solvents have the disadvantage that they are difficult to be removed from the product. Therefore, preferably, the solvent is selected from alkanes selected from the list consisting of C4, C5, C6, C7, C8, C9, and C10 alkanes, or mixtures thereof, more preferably from n-alkanes selected from the list consisting of C4, C5, C6, C7, C8, C9, and C10 n-alkanes, or mixtures thereof.

Typically, the content of the polymer in the product stream (a) withdrawn from the solution polymerization process comprising the solvent, the polymer and the unreacted monomer and optionally comonomer is from 10 to 35 wt.-%, preferably from 12.5 to 30 wt.-%, more preferably from 15 to 25 wt.-%, and most preferably from 19 to 24 wt.-%.

In a preferred embodiment of the invention, in step A) 55 to 90 wt.-%, preferably 60 to 70 wt.-%, of the mixture of volatiles are removed from the product stream (a). Likewise, in a preferred embodiment of the invention, in step B) 10 to 40 wt.-%, preferably 25 to 30 wt.-%, of the mixture of volatiles are removed from the first condensed polyolefin-rich stream (c). Moreover, in a preferred embodiment of the invention, in step C) up to 5 wt.-%, preferably 0.2 to 5 wt.-%, of the mixture of volatiles are removed from the second condensed polyolefin-rich stream (c'). Hence, mostly preferred, in step A) 60 to 90 wt.-% of the mixture of volatiles are removed from the product stream (a), in step B) 25 to 40 wt.-% of the mixture volatiles are removed from the first condensed polyolefin-rich stream (c), and in step C) 0.2 to 5 wt.-% of the mixture volatiles are removed from the second condensed polyolefin-rich stream (c').

*Step A)*

Preferably, the first polyolefin-lean vapor stream (b) produced in step A) is overheated. Preferably, step A) is carried out under conditions to allow volatile compounds in the effluent stream to evaporate from the condensed phase, which mainly comprises polymer. Preferably, temperatures used in step A) are between 150 and 300 °C, more preferably between 175 and 275 °C, more preferably between 200 and 250 °C. Moreover, step A) is preferably carried out at a pressure of 1 to 15 bara, more preferably 2 to 12 bara, and most preferably 2.5 to 10 bara. Most preferably, in such case, step A) is carried out at a temperature of 200 to 250 °C and at a pressure of 2.5 to 10 bara. Hence, the conditions as found in the first polyolefin-lean vapor stream (b) are set that the mixture of volatiles, i.e. the solvent, unreacted monomer and/or comonomer, is not at its condensation point. Therefore, the mixture of compounds in the first polyolefin-lean vapor stream (b) is generally found to be present in gaseous form. Therefore, preferably, step A) is a flash separation step. The first polyolefin-lean vapor stream (b)is introduced into the initial feed stream (a') of the polymerization section without the need of a further purification step upon adjustment of temperature and pressure to the requirements of the polymerization reaction. It is believed that with the high pressure drop realized in this first separation step only components which are not problematic for the polymerization reaction and/or the composition of the first polyolefin-lean vapor stream (b) are evaporated in this step. Hence, this stream is predominately consisted of solvent(s), monomer(s), and comonomer(s).

As indicated above, the first polyolefin-lean vapor stream (b) contains the major part of the non-reactive solvent and a big part of non-reacted comonomers next to non-reacted monomers. On the other hand, preferably, the polyolefin solution concentration in the first condensed polyolefin-rich stream (c) is more than 60 wt.-%, preferable more than 65 wt.-%, and most preferably more than 70 wt.-%. If the polymer concentration in the first condensed polyolefin-rich stream (c) is lower than 60 wt.-%, the amount of volatiles in the final polymer product will have higher levels. The polymer concentration in the first condensed polyolefin-rich stream (c) depends on the separation efficiency in step A) or generally in the flash separation steps. In the following, it is explained, that and why it is important to have the required temperature of the stream introduced into the flash separation step, i.e. the product stream (a) entering step A).

The following is exemplified for solution polymerization processes of polymers having very low densities, such as down to 855 kg/m$^3$, such as polyethylene elastomers. Such processes are conducted at lower polymerization temperatures down to 150 °C. Consequently, the polymer solution concentration in the first condensed polyolefin-rich stream (c) decreases below 60 wt.-% due to the lower temperatures of the product stream (a). Reason is that the separation efficiency depends on the temperature of the stream entering the flash separation step as well as the pressure drop in step A). Given that the pressure drop stays constant and the temperature is low (down to 150 °C), the separation efficiency of the flash separation step decreases. To avoid lower polymer concentrations, the pressure in step A) can be lowered

and thus the pressure drop increases. However, as a further consequence, the condensation temperature of the composition of the first polyolefin-lean vapor stream (b) is lower and generally, a low pressure steam is generated on the first heat exchanger. Second, the first polyolefin-lean vapor stream (b) has a too low pressure, which is less beneficial for the process or for return to a local system, in particular if the pressure generally is lower than 4 bara.

Therefore, in case of low density polyethylene elastomer production in the process of the present invention, the conditions in step A) can be adopted to recover more energy. For generating steam at a moderate pressure level for the polymerization of polymers having very low densities, it is important to heat the reactor product stream (a) sufficiently. The pressure level in step A) can then be higher and the pressure level of the generated steam in the first polyolefin-lean vapor stream (b) can be lifted.

Another advantage of higher pressures at the same polyethylene solution concentrations is that the volume of the vapor flow decreases, creating lower vapor velocities in the first polyolefin-lean vapor stream (b). This has the effect that less polyethylene is entrained into the first polyolefin-lean vapor stream (b).

*Step B)*

Preferably, the second polyolefin-lean vapor stream (b’) produced in step B) is overheated. Preferably, step B) is carried out under conditions to allow volatile compounds in the effluent stream to evaporate from the first condensed polyolefin-rich stream (c), which mainly comprises polymer. Preferably, temperatures used in step A) are between 150 and 300 °C, more preferably between 175 and 275 °C, more preferably between 200 and 250 °C. Moreover, step B) is preferably carried out at a pressure of 1 to 15 bara, more preferably 1 to 12 bara, and most preferably 1.5 to 10 bara. If flash separation steps are carried out several times in a row, the pressure is lowered step after step and the temperature of the polyolefin is usually increased step after step. Thus, the pressure in step B) is lower than in step A), if step A) is carried out as a flash separation step. Furthermore, the temperature in step B) is higher than in step A), if step A) is carried out as a flash separation step. Most preferably, in such case, step B) is carried out at a temperature of 200 to 250 °C and at a pressure of 1.5 to 10 bara. Preferably, the second polyolefin-lean vapor stream (b’) is returned to the polymer recycling process upon adjusting pressure and temperature to the requirements of the recycling process. The second polyolefin-lean vapor stream (b’) is returned to the recycling process without any further purification.

Hence, the conditions as found in the second polyolefin-lean vapor stream (b’) are set that the mixture of volatiles, i.e. the solvent, unreacted monomer and/or comonomer, is not at its condensation point. Therefore, the mixture of compounds in the second polyolefin-lean vapor stream (b’) is generally found to be present in gaseous form. Therefore, preferably, step B) is a flash separation step. The second polyolefin-lean vapor stream (b’) withdrawn from step B) can be introduced into the initial feed stream (a’) of the polymerization section without the need of a further purification step upon adjustment of temperature and pressure to the requirements of the polymerization reaction. It is believed that problematic active species such as active catalyst are decomposed in step B). Therefore, such impurities will not reduce the activity of the catalyst in the reactor. Furthermore, such impurities will also not let the monomer/comonomer mixture in the second polyolefin-lean vapor stream (b’) spontaneously polymerize after adjustment of temperature and pressure to the requirements of the polymerization reaction. Hence, fouling of the equipment and degradation of the quality of the polymer produced in the polymerization reaction can be avoided.

Step C)

In a preferred embodiment of the invention step C) is a flash separation step preferably with preceding addition of a stripping agent into the second condensed polyolefin-rich stream (c’) or an extruding/degassing step.

If step C) is a flash separation step, the stripping is preferably added to the second condensed polyolefin-rich stream (c’) before being introduced into step C). More preferably, the stripping agent is added in an amount of 2 to 4 wt.-% with respect to the total weight of the second condensed polyolefin-rich stream (c’). Preferably, if step C) is a flash separation step, step C) is carried out at a temperature of 200 to 250 °C. Moreover, in such case, step C) is preferably carried out at vacuum pressure conditions. If flash separation steps are carried out several times in a row, the pressure is lowered step after step and the temperature is usually increased step after step. Thus, the pressure in step C) is lower than in step B), if step C) is carried out as a flash separation step. Furthermore, the temperature in step C) is higher than in step B), if step C) is carried out as a flash separation step. Preferably, in case step C) is a flash separation step, step C) is carried out at a temperature of 150 to 300 °C, preferably 175 to 275 °C, and most preferably 200 to 250 °C. Moreover, in such case, step C) is preferably carried out at vacuum pressure conditions. Hence, most preferably, in case step C) is a flash separation step, the stripping agent is fed in an amount of 2 to 4 wt.-% with respect to the total weight of the second condensed polyolefin-rich stream (c’) before the second condensed polyolefin-rich stream (c’) enters the flash separator, and step C) is carried out at a temperature of 200 to 250 °C and at vacuum pressure conditions.

If step C) is an extruding/degassing step, the second condensed polyolefin-rich stream (c’) is preferably introduced into a devolatilization extruder. Preferably, the extruder has a backward degassing at a pressure in the range of

0.5 bar above atmospheric pressure to 0.5 bar below atmospheric pressure, preferably at atmospheric pressure, whereby atmospheric pressure denotes the natural atmospheric pressure of the earths atmosphere varying at about 1 atm, and forward degassing domes at vacuum conditions. Most preferably, the extruder makes use of a stripping agent dosing in between the degassing domes.

The stripping agent is preferably selected from the list consisting of carbon dioxide, nitrogen, and water. Most preferably, the stripping agent is water.

The last condensed polyolefin-rich stream (c*) is mainly comprised by the polyolefin produced in the polymerization reaction.

Preferably, the last polyolefin-lean vapor stream (b*) withdrawn from step C) is purified in a recovery section and optionally subsequently returned to the initial feed stream (a) of the polymerization section.

*Polyolefin*

The polyolefin obtainable by a process according to the process of the present invention preferably comprises less than 500 ppm volatiles from the mixture of volatiles, preferably less than 200 ppm volatiles, most preferably equal to or less than 150 ppm.

**Test Methods**

*a) Volatiles content*

The volatile content of the polyolefin is determined using head space extraction according to VDA 277:1995 using a gas chromatograph and a headspace method. The equipment was an Agilent gas chromatograph with a WCOT-capillary column (wax type) of 30 m length and 0.25 mm x 1.0 micrometer inner diameter (1 μm film thickness). A flame ionization detector was used with hydrogen as a fuel gas. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and carrier gas flow rate of 1 ml/min. The emission potential was measured on the basis of the sum of all values provided by the emitted substances after gas chromatography analysis and flame ionization detection with acetone as the calibration standard. Sample introduction (pellets, about 2 g) was by headspace analysis (20 ml head space vial) after conditioning at 120 °C for 5 hours prior to the measurement. The unit is microgram carbon per gram of sample, respectively ppm.

**Examples**

In the following inventive example, the present invention is exemplified using calculations with Aspen HYSYS.

*Inventive Example IE1*

A typical product stream as received from the polymerization section of a polyethylene solution polymerization process is modeled as consisting of 20 wt.-% polyethylene and 80 wt.-% n-hexane at a temperature of 250 °C and a pressure of 85 barg. This mixture is separated in a first flash separation step, the polyethylene-rich phase is removed and used for the next separation steps. The polyethylene-lean phase is returned directly to the polymerization section of the recycling process without any further purification. In the first flash separation step, the pressure drops down to 10 bara while the temperature decreases to 198 °C.

Subsequently, the polyolefin-rich phase of the first flash separation step, which contains 68 wt.-% polyethylene, is heated again to 250 °C and introduced into a second flash separation step operated at a pressure of 1.5 bara. Due to the flashing operation, the temperature of the polyolefin-rich phase decreases to 217 °C. Again, the polyolefin-lean vapor phase of the second flash separation step is condensed and returned directly to the polymerization section of the polymerization process without any further purification.

The polyolefin-rich phase of the second flash separation step, which contains 98 wt.-% polyethylene, is again heated to 250 °C and water is mixed to the polyolefin-rich phase in an amount of 3 wt.-% with respect to the total weight of the polyolefin-rich phase. Using a third flash vessel operated at strong vacuum pressure conditions the last parts of the hydrocarbons are removed. The level of volatiles in the polyolefin is below 150 ppm. The polyolefin-lean phase of the third flash separation step is introduced into a recovery section to separate solvent, comonomers (if present), light and heavy hydrocarbons.

## Claims

1. A process for the separation of at least one polyolefin from a product stream (a) from a solution polymerization process, wherein the product stream (a) comprises the at least one polyolefin and a mixture of volatiles, the process comprising the steps of:

   A) separating the product stream (a) into a first polyolefin-lean vapor stream (b) and a first condensed polyolefin-rich stream (c);
   B) separating the first condensed polyolefin-rich stream (c) into a second polyolefin-lean vapor stream (b') and a second condensed polyolefin-rich stream (c');
   C) separating the second condensed first condensed polyolefin-rich stream (c') into a last polyolefin-lean vapor stream (b*) and a last condensed polyolefin-rich stream (c*);

   **characterized in that**
   the first polyolefin-lean vapor stream (b) and the second polyolefin-lean vapor stream (b') are introduced into an initial feed stream (a') of the solution polymerization process without any further purification step.

2. The process according to any of the preceding claims, wherein the mixture of volatiles comprises solvent, monomers, and comonomers

3. The process according to claim 2, wherein the solvent is selected from the group consisting of C4, C5, C6, C7, C8, C9 and C10 alkanes or mixtures thereof, preferably is selected from the group consisting of C4, C5, C6, C7, C8, C9 and C10 n-alkanes or mixtures thereof.

4. The process according to any of the preceding claims, wherein in step A) 60 to 90 wt.-% of the mixture of volatiles are removed from the product stream (a).

5. The process according to any of the preceding claims, wherein in step B) 25 to 40 wt.-% of the mixture of volatiles are removed from the first condensed polyolefin-rich stream (c).

6. The process according to any of the preceding claims, wherein in step C) 0.2 to 5 wt.-% of the mixture of volatiles are removed from the second condensed polyolefin-rich stream (c').

7. The process according to any of the preceding claims, wherein step A) is a flash separation step.

8. The process according to claim 7, wherein step A) is carried out at a feed temperature of 200 to 250°C and at a pressure of at least 2.5 to 10 bara.

9. The process according to any of the preceding claims, wherein step B) is a flash separation step.

10. The process according to claim 9, wherein step B) is carried out at a feed temperature of 200 to 250 °C and at a pressure of 1.5 to 10 bara.

11. The process according to any of the preceding claims, wherein step C) is a flash separation step with preceding addition of a stripping agent into the second condensed polyolefin-rich stream (c') or an extruding/degassing step.

12. The process according to claim 11, wherein step C) is a flash separation step and is carried out at a feed temperature of 200 to 250 °C and at vacuum pressure conditions.

13. The process according to any of the preceding claims, wherein the solution polymerization process is conducted in the presence of a metallocene catalyst.

14. A polyolefin separated from a mixture of volatiles obtainable by a process according to any of the preceding claims 1 to 13.

15. The polyolefin according to claim 14, wherein the polyolefin comprises less than 150 ppm hydrocarbons from the mixture of volatiles.

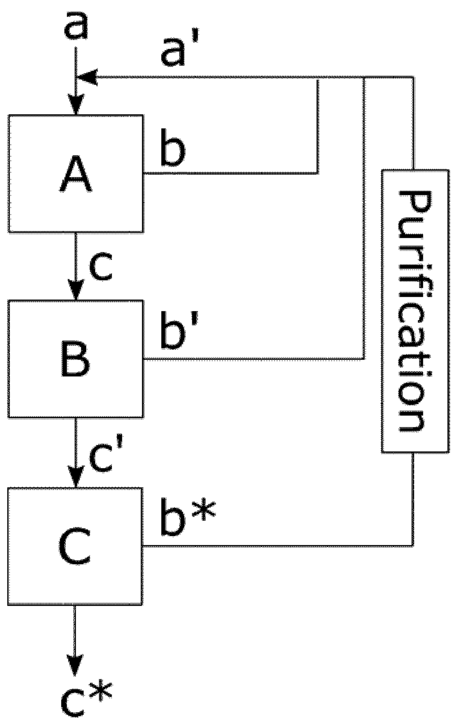


Figure 1

Europäisches Patentamt
European Patent Office
Office européen des brevets

# EUROPEAN SEARCH REPORT

Application Number
EP 21 19 1502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/137634 A1 (BOREALIS AG [AT]) 18 July 2019 (2019-07-18) * page 3, line 17 - page 5, line 19; claims 1-15; figure 1; examples 1-6 * * page 9, line 24 - page 11, line 20 * * page 12, line 6 - page 13, line 12 * * page 13, line 14 - page 14, line 22 * * page 16, line 8 - line 13 * ----- | 1-15 | INV. C08F2/06 C08F6/00 C08F110/02 C08J11/02 |
| X | WO 2017/108963 A1 (BOREALIS AG [AT]) 29 June 2017 (2017-06-29) | 14,15 | |
| A | * page 21, line 1 - page 22, line 9; example 1 * ----- | 1-13 | |
| | | | TECHNICAL FIELDS SEARCHED (IPC) |
| | | | C09J C08F C08J |

The present search report has been drawn up for all claims

1

| Place of search | Date of completion of the search | Examiner |
|---|---|---|
| Munich | 23 March 2022 | Gold, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 21 19 1502

This annex lists the patent family members relating to the patent documents cited in the above-mentioned European search report. The members are as contained in the European Patent Office EDP file on
The European Patent Office is in no way liable for these particulars which are merely given for the purpose of information.

23-03-2022

| Patent document cited in search report | Publication date | Patent family member(s) | Publication date |
|---|---|---|---|
| WO 2019137634 A1 | 18-07-2019 | BR 112020012013 A2 | 17-11-2020 |
| | | CA 3083677 A1 | 18-07-2019 |
| | | CN 111630071 A | 04-09-2020 |
| | | EP 3737704 A1 | 18-11-2020 |
| | | KR 20200087796 A | 21-07-2020 |
| | | SG 11202004491V A | 29-07-2020 |
| | | US 2020325257 A1 | 15-10-2020 |
| | | WO 2019137634 A1 | 18-07-2019 |
| WO 2017108963 A1 | 29-06-2017 | BR 112018012879 A2 | 04-12-2018 |
| | | CA 3004181 A1 | 29-06-2017 |
| | | CN 108602900 A | 28-09-2018 |
| | | EP 3394114 A1 | 31-10-2018 |
| | | KR 20180082573 A | 18-07-2018 |
| | | SA 518391783 B1 | 21-09-2021 |
| | | SG 11201803907Q A | 30-07-2018 |
| | | US 2018355075 A1 | 13-12-2018 |
| | | WO 2017108963 A1 | 29-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020060745 A1
- WO 2020060745 A
- WO 2009126277 A2
- WO 2018108917 A1
- WO 2018108918 A1
- WO 2018178151 A1
- WO 2018178152 A1